# EUROPÄISCHE PATENTSCHRIFT

(11) **EP 1 297 269 B1**
(45) Veröffentlichungstag und Bekanntmachung des Hinweises auf die Patenterteilung: **24.09.2008**
(21) Anmeldenummer: 01949422.8
(22) Anmeldetag: 20.06.2001
(51) Int. Cl.: F16F 15/16, B21D 53/26

(54) **VERFAHREN ZUR HERSTELLUNG EINES DREHSCHWINGUNGSDÄMPFERGEHÄUSES, INSBESONDERE EINES GEHÄUSES FÜR EINEN VISKOSITÄTSDREHSCHWINGUNGSDÄMPFER**
METHOD FOR PRODUCING A TORSIONAL VIBRATION DAMPER HOUSING, ESPECIALLY A HOUSING FOR A VISCOSITY TORSIONAL VIBRATION DAMPER
PROCEDE POUR PRODUIRE UN BOITIER D'AMORTISSEUR DE VIBRATIONS TORSIONNELLES, NOTAMMENT UN BOITIER POUR AMORTISSEUR DE VIBRATIONS TORSIONNELLES DE VISCOSITE

(30) Priorität: 20.06.2000 DE 10029317
(43) Veröffentlichungstag der Anmeldung: 02.04.2003
(73) Patentinhaber: Hasse & Wrede GmbH, 12681 Berlin (DE); WF Maschinenbau- und Blechformtechnik GmbH Co. KG, 48324 Sendenhorst (DE)
(72) Erfinder: PAPE, Rolf, 14169 Berlin (DE); SEIDEL, Klaus, Peter, 14163 Berlin (DE)
(74) Vertreter: Mattusch, Gundula
(86) Internationale Anmeldenummer: PCT/EP2001/006967
(87) Internationale Veröffentlichungsnummer: WO 2001/098684

(56) Entgegenhaltungen:
- EP-A- 0 512 295
- WO-A-98/36858
- DE-A- 4 118 871
- DE-U- 20 008 824
- DE-U- 29 921 590

## Beschreibung

Die Erfindung betrifft ein Verfahren zur Herstellung eines Drehschwingungsdämpfergehäuses gemäß dem Gattungsbegriff des Patentanspruchs 1.

Viskositätsdrehschwingungsdämpfer der in Rede stehenden Bauart sind in vielfältiger konstruktiver Auslegung bekannt; desgleichen sind verschiedene Fertigungsverfahren bekannt, nach welchen derartige Dämpfer bzw. Dämpfergehäuse gefertigt werden. Bei der Herstellung der in Rede stehenden Viskositätsdrehschwingungsdämpfer, im folgenden kurz Visco-Dämpfer genannt, wird im allgemeinen ein Gehäusekörper gebildet, zu welchem eine Arbeitskammer zur Aufnahme eines seismischen Ringes und eines viskosen Dämpfungsmediums gehört. Der seismische Trägheitsring ist mit engem Spiel gleitend in der Arbeitskammer gelagert. Die verbleibenden Spalträume zwischen seismischem Ring und Arbeitskammer sind mit hochviskosem Silikonöl als Dämpfungsmedium gefüllt. Mittels eines radial innen liegenden Flansches wird das ringförmige Dämpfergehäuse an einem zu bedämpfenden sich drehenden Maschinenteil, in der Regel an der zu bedämpfenden Welle angeschraubt; in den meisten Anwendungsfällen handelt es sich hierbei um die Kurbelwelle von Kolbenmaschinen, vor allem Dieselmotoren, an deren Kraftgegenseite der Visco-Dämpfer angebracht ist.

Die Gehäuse der Visco-Dämpfer wurden ursprünglich, sofern sie mit einem aufgeschweißten oder eingewalzten Deckel verschlossen werden sollten, aus Vollmaterial, vorgeformten Gesenkschmiedestücken und duktilem Gußeisen spanend herausgearbeitet, wie beispielsweise aus der Figur 6 der DE 951 965 bekannt. Aus wirtschaftlichen Erwägungen heraus wurde später das sogenannte Dünnblechgehäuse entwickelt, das aus zwei tiefgezogenen Blechkappen mit Hilfe der Elektronenstrahlschweißung zusammengefügt wurde. Die WO 96/41974 beschreibt ein solches zweiteiliges Gehäuse.

Um Arbeitsschritte zu reduzieren wurde auch schon frühzeitig das Augenmerk darauf gerichtet einteilige, durch aufwendiges Hydroformen, Drücken und Prägepolieren hergestellte Dünnblechgehäuse, die erst durch Hinzufügen des Deckels eine knapp bemessene Flanschstärke erhielten, herzustellen. Dies beschreibt der Stand der Technik in der EP 0 423 243 B1. Die EP 0 534 424 B1 beschreibt einen Visco-Dämpfer mit mindestens einer angeformten Rippenkeilriemenspur.

Alle vorab genannten, aus dem Stand der Technik bekannt Herstellungsverfahren sind sehr aufwendig an Maschinen und Werkzeugen, die für das Umformen der vorab genannten Dünnblechgehäuse erforderlich sind. Die Vielfalt an Visco-Dämpfertypen wird durch den erforderlichen hohen Aufwand auf das Nachteiligste eingeschränkt. Unverändert besteht der Wunsch, verschiedene Gehäuseformen aus einfachen Blechronden preisgünstig herauszuarbeiten. Ein Schritt in dieser Richtung beschreibt der Stand der Technik in der EP 0 512 295, welche das Spalten von Gehäuserohlingen in Form von Blechronden beschreibt.

Ausgehend von den aus dem Stand der Technik aufgezeigten Nachteilen des hohen Aufwandes an Maschinen und Werkzeugen zur Realisierung einer Vielzahl von Dämpfertypen besteht die Aufgabe der Erfindung darin, auf neuartige Weise eine Grobblechronde spanlos in ein Dämpfergehäuse mit beliebigen Abmessungen und beanspruchungsgerecht differenzierten Wandstärken für eine Vielzahl von Dämpfertypen herzustellen.

Es soll insbesondere die Aufgabe gelöst werden, mit einfachen Verfahrensschritten und ohne aufwendige Werkzeugwechsel einen Gehäusekörper herzustellen, welcher nicht nur eine Arbeitskammer aufweist, sondern in einfacher Art und Weise mit denselben Verfahrensschritten zusätzliche Riemenscheiben bzw. Stützkrägen und Kupplungselemente aufweist.

Erfindungsgemäß wird diese Aufgabe durch ein Verfahren nach dem Kennzeichen des Patentanspruchs 1 gelöst, wobei in aufeinanderfolgenden Fließdrück-Umformschritten alle aus der Ebene der Blechronde, welche die Gehäuserückwand ausbildet, herausragenden Teile des Dämpfergehäuses aus der Blechronde unter Verringerung der Wandstärke derselben spanlos zu einem einstückigen Dämpfergehäuse fließgedrückt werden.

Vorteilhafte Ausgestaltungen und Weiterbildungen der Erfindung sind Gegenstand der Unteransprüche.

Mit Hilfe von aufeinanderfolgenden Fließdrück-Umformschritten wird unter Verwendung einer Drückrolle und eines Dornkörpers das Material einer Grobblechronde auf beiden Seiten der Blechronde fließgedrückt, wobei die Wände der Arbeitskammer als auch zusätzliche Riemenscheiben, Stützkragen und Kupplungssitze durch Verringerung der Wandstärke der Blechronde durch Fließdrücken ausgeformt werden. In einem ersten Verfahrensschritt erfolgt das Fixieren der Blechronde auf einer Fließdrückmaschine. In einem nächsten Arbeitsschritt erfolgt das Drücken der radial inneren, die Arbeitskammer teilweise bildenden Wand, des Lagerstuhls, aus der Blechronde, beginnend in einem definierten Abstand von deren radial äußeren Umfang mittels Drückrolle gegen einen Dornkörper radial nach innen. Der radial außen auf dem Umfang der Blechronde entstehende Wulst wird mittels einer Drückrolle gegen eine Zylinderhülse gedrückt und unter Ausformung des radial äußeren, sich in einem rechten Winkel von der Blechronde weg erstreckende Wand, wird der Außenmantel der Arbeitskammer ausgebildet. Auf der nach außen gerichteten Oberfläche des Außenmantels wird spanlos, unter Drücken des Außenmantels gegen eine Drückdornkörper eine profilierte Laufspur, insbesondere eine sogenannte Poly-V-Spur zur Aufnahme eines profilierten Zugmittels und hier insbesondere eines Keilrippenriemens ausgebildet.

Mittels weiterer Verfahrensschritte erfolgt durch Fließdrücken der Gehäuserückwand auf der der Arbeitskammer gegenüberliegenden Seite der Blechronde von radial außen nach radial innen gegen eine Drückdornkörper die Ausbildung einer rückwärtigen Riemenscheibe. In Abhängigkeit vom gewünschten Dämpfertyp erfolgt die Verschiebung des Materialvolumens auf der Gehäuserückwand der Blechronde durch die Fließdrückrolle. Auch diese zusätzliche Riemenscheibe, welche zur Aufnahme eines Zugmittels vorgesehen ist, wird mit einer profilierten Oberfläche, insbesondere einer Laufspur, unter Fließdrücken der Oberfläche der Riemenscheibe profiliert.

In einem weiteren Verfahrensschritt folgt durch weiteres Fließdrücken auf der dem Außenmantel und dem Lagerstuhl gegenüberliegenden Seite der Blechronde die Ausbildung eines Stützkragens und eines Kupplungssitzes zur Aufnahme einer drehelastisch abgekoppelten Riemenscheibe spanlos, durch Fließdrücken gegen einen Drückdornkörper. Während der verschiedenen Verfahrensschritte des Fließdrückens erfolgt eine Verringerung der Wandstärke der Blechronde, welche die Gehäuserückwand des Dämpfergehäuses ausbildet durch Verschieben der Materialvolumina in die jeweiligen von der Gehäuserückwand bzw. der Blechronde sich in der Regel rechtwinklig erstreckenden Gehäuseelemente der verschiedenen Dämpfergehäusetypen.

Die Ausbildung der Stützkragen durch Fließdrücken der Blechronde erfolgt von radial außen nach radial innen durch Fließdrücken gegen einen Drückdornkörper, wobei in einem weiteren Verfahrensschritt der Kupplungssitz gegen einen Drückdornkörper aufgeworfen wird, in der Art, dass eine Fließdrückrolle von radial außen, nach dem Stützkragen beginnend nach radial innen in Richtung einer Zentrierbohrung fließdrückt. Dies hat den Vorteil, dass die Gehäuserückwand im Bereich des Kupplungssitzes, also radial um die Zentrierbohrung eine größere Wandstärke aufweist, als in den anderen Bereichen.

Die Erfindung ist nachfolgend anhand von Ausführungsbeispielen unter Bezugnahme auf die beigefügten Zeichnungen näher erläutert.

Dabei zeigen:
- Figur 1: in schematischer Darstellung, teilweise geschnitten das Dämpfergehäuse eines Visco-Dämpfers,
- Figur 2: sind schematische Teilansichten des erfindungsgemäßen Verfahrens zur Herstellung des in Figur 1 gezeigten Gehäusekörpers eines erfindungsgemäßen Visco-Dämpfers,
- Figur 3: einen Teilschnitt eines erfindungsgemäßen Visco-Dämpfergehäuses mit v-profilierter Außenwand,
- Figur 4: schematische Teilansichten des erfindungsgemäßen Verfahrens zur Herstellung des in Figur 1 dargestellten Gehäusekörpers mit rückwärtiger profilierter Riemenscheibe,
- Figur 5: eine Teilansicht eines erfindungsgemäßen Visco-Dämpfergehäuses mit profilierter Außenwand und profilierter rückwärtiger Riemenscheibe und

- Figur 6: in Teilansicht ein nach dem erfindungsgemäßen Verfahren hergestelltes Dämpfergehäuse mit Stützkragen und Kupplungssitz.

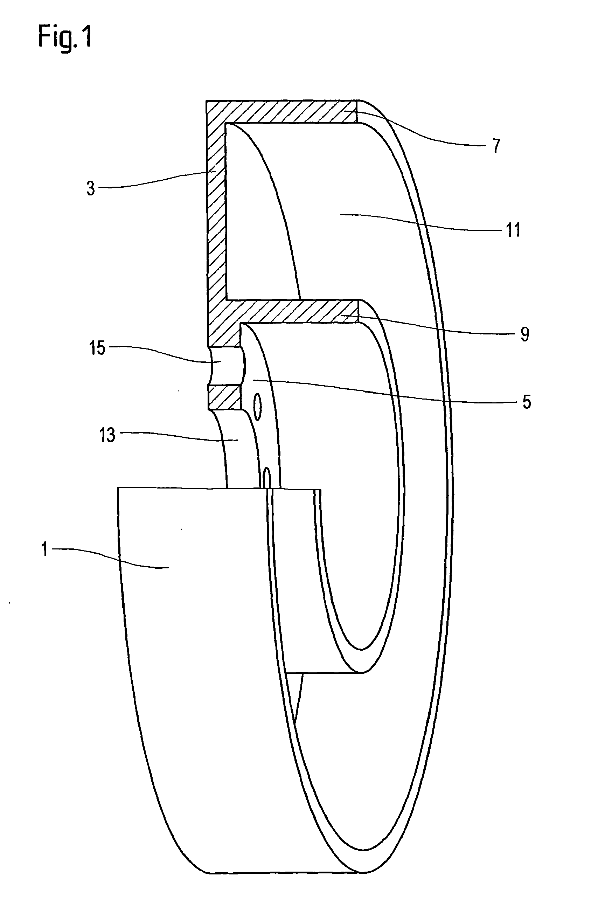

In Figur 1 ist in halbierter Schnittansicht ein Drehschwingungsdämpfergehäuse dargestellt, welches aus einem Gehäusekörper 1, mit einer Arbeitskammer 11, welche durch die Außenwand 7, die Gehäuserückwand 3 und den Lagerstuhl 9 begrenzt wird. Mittig in der Gehäuserückwand 3 des Dämpfergehäuses 1 ist eine Zentrierbohrung 13 ausgebildet. Das Gehäuse wird am Befestigungsflansch 5 mittels Schrauben, für die hier nur die Anschraublöcher 15 gezeigt sind mit der zu bedämpfenden nicht dargestellten Welle verbunden. Ein kallibrierter Vorsprung der Welle greift hierbei in die Zentrierbohrung 13 ein. Figur 1 zeigt in axonometrischer, teilweise geschnittener Darstellung das Gehäuse eines Visco-Dämpfers in seiner ursprünglichen Form.

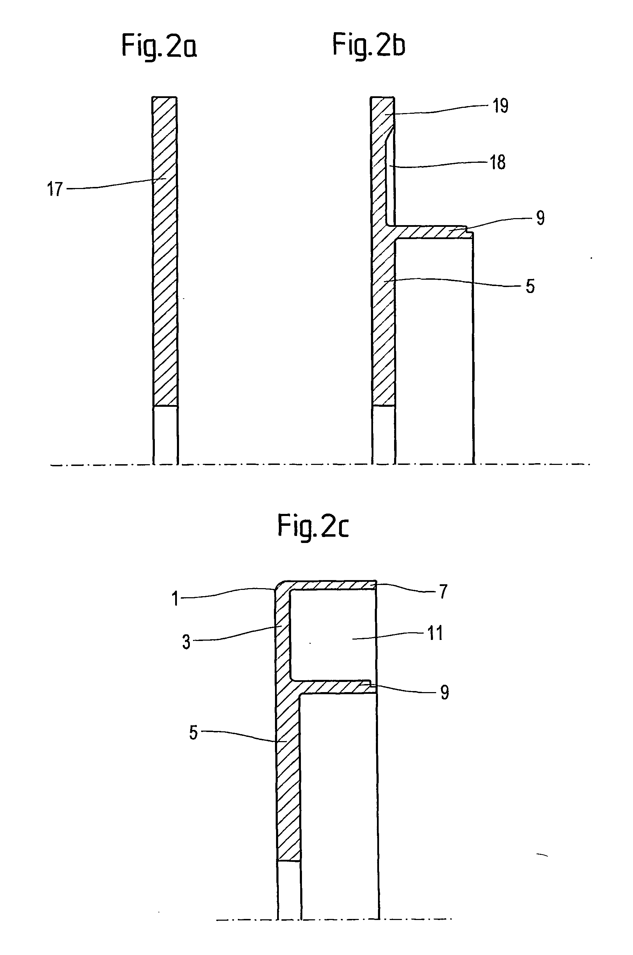

Figur 2 zeigt, wie aus einer gelochten Grobblechronde 17, welche in Figur 2a dargestellt ist durch erfindungsgemäßes Fließdrücken zunächst der Lägerstuhl 9 aufgeworfen wird, wobei die Fließdrückrolle in einem radial umfänglichen Abstand von dem äußeren Umfang der Blechronde 17 gegen einen Drückdorn, welcher nicht dargestellt ist angesetzt wird und die Materialmasse des Lagerstuhls unter Reduzierung der Wandstärke 18 der Blechronde 17 aufgeworfen wird. Der nach dem Fließdrücken des Lagerstuhls 9 verbleibende Wulst 19 in Figur 2b liefert den Werkstoff zum Abstrecken bzw. Auswalzen des Außenmantels 7 in Figur 2c. Durch Fließdrücken des Dämpfergehäuses 1 auf der Blechronde, welche die Gehäuserückwand 3 ausbildet, erfolgt ein Verschieben der Materialmassenvolumina unter Ausbildung von unterschiedlich starken, in ihrer Dicke variierenden Bereichen der Gehäuserückwand 3. So ist in Figur 2c deutlich ersichtlich, dass die Gehäuserückwand im Bereich der Arbeitskammer 11 dünner bemessen ist als im Bereich des Befestigungsflansches 5, dieser ist stärker ausgebildet als der übrige Bereich der Gehäuserückwand 3.

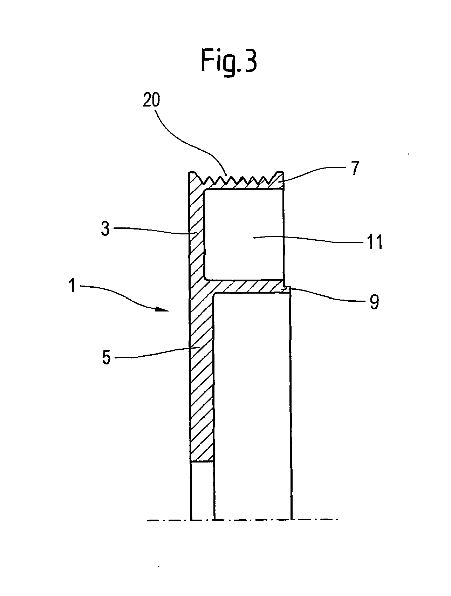

Figur 3 zeigt ein nach Figur 2 hergestelltes Dämpfergehäuse 1 mit einem Außenmantel 7, einem Lagerstuhl 9, einer Gehäuserückwand 3 im Bereich der Arbeitskammer 11 sowie eine Gehäuserückwand 5, verstärkt ausgebildet im Bereich des Befestigungsflansches. Der äußere Umfang der Arbeitskammer 11, der Außenmantel 7 weist eine Keilrippenspur 20 auf dem Außenmantel 7 des Dämpfergehäuses 1 auf.

In das Profil dieser Keilrippenspur 20 greift ein profilierter Keilriemen, also ein profiliertes Zugmittel ein.

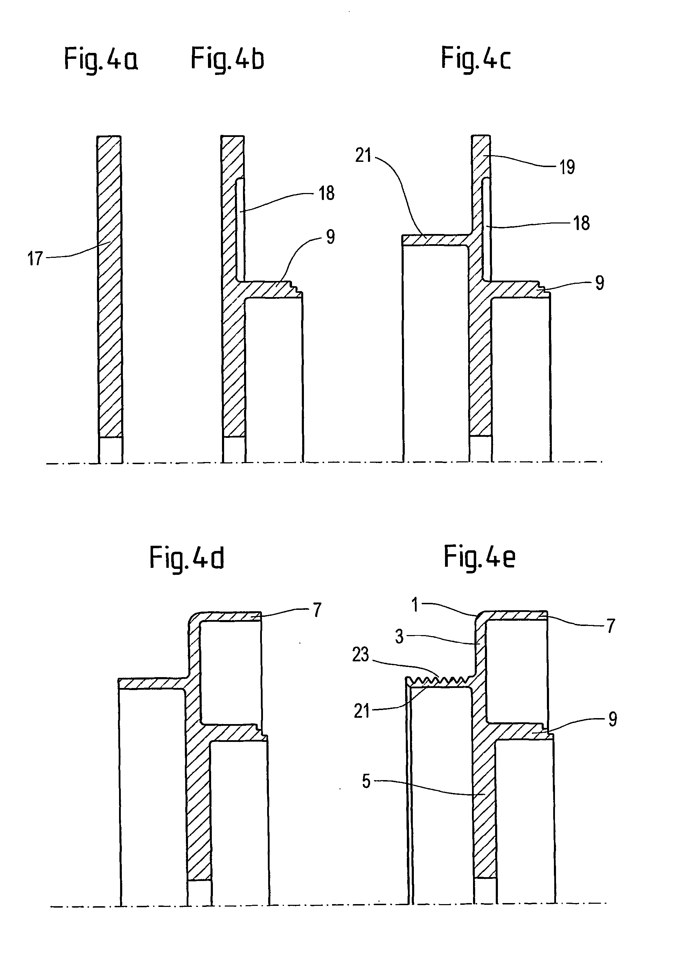

Figur 4 stellt das erfindungsgemäße Verfahren zum Fließdrücken eines Dämpfergehäuses 1 mit rückwärtiger Riemenfelge 21 dar. Wiederum nimmt der Prozess von einer gelochten Grobblechronde 17 beginnend seinen Ausgang, hier Figur 4a. Wie bereits in Figur 2 beschrieben erfolgt in einem Fließdrückarbeitsschritt die Ausbildung des Lagerstuhls 9 unter Wandstärkenreduzierung der Grobblechronde 17 im Bereich 18. Der radial nach innen gerichtete Fließdrückvorgang beginnt beabstandet vom äußeren Umfang der Grobblechronde 17 unter Ausbildung einer Wulst 19 in Figur 4c. Auf der dem Lagerstuhl 9 und der Wulst 19 gegenüberliegende Seite erfolgt unter Reduzierung der Wandstärke der Blechronde 17 das Fließdrücken der rückwärtigen Riemenscheibe durch eine Drückrolle gegen einen Drückdorn so weit, dass diese im wesentlichen senkrecht von der Blechronde weg aufgeworfen wird. In Figur 4d wird durch Auswalzen des Wulstes 19 der Außenmantel 7 ausgeformt. Durch Einwalzen der Keilrippenriemenspur 23 erhält das Gehäuse seine endgültigen Umrisse in Figur 4e.

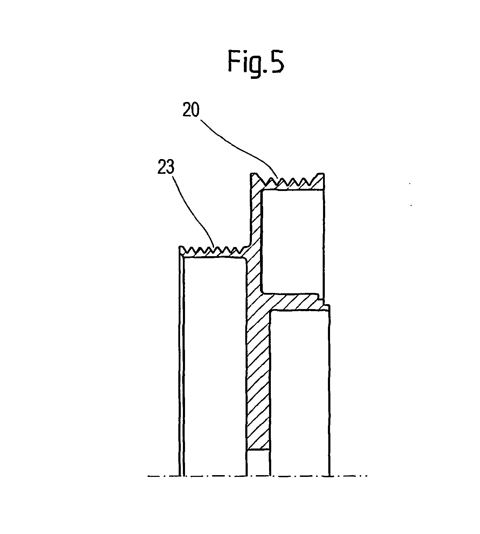

Die Kombination der beiden vorstehend beschriebenen Fließdrückverfahren führt zum Dämpfergehäuse in Figur 5. Eine erste Keilriemenspur 20 ist auf dem Außenmantel eingewalzt und die rückwärtige Riemenfelge 21 trägt mindestens eine zweite Keilrippenspur 23.

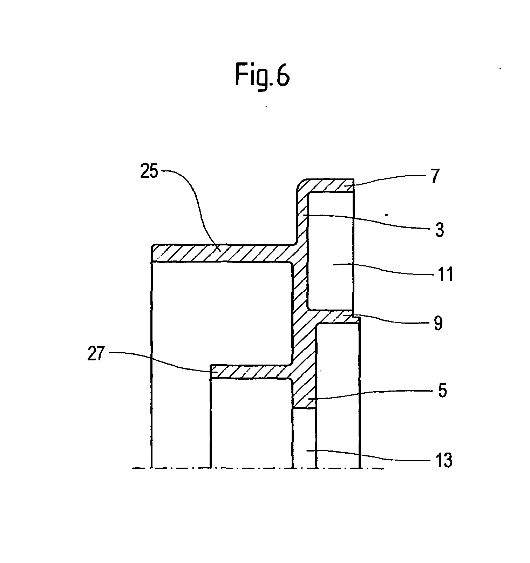

Figur 6 zeigt eine weitere Variante einer Gehäusebauart, die sich dank des erfindungsgemäßen Verfahrens ausbilden läßt. Figur 6 zeigt ein Dämpfergehäuse, das mit einer torsionsweichgekoppelten und deshalb zusätzlich abgestützten Keilriemenscheibe gepaart wird. Hierbei ist die verdrehweiche Gummikupplung mit dem Kupplungssitz 27 zu verbinden, während der Stützkragen 25 zur gleitenden Lagerung der Riemenscheibe dient. Die Ausbildung des Stützkragens 25 erfolgt durch Fließdrücken auf der der Arbeitskammer 11 gegenüberliegenden Seite der Blechronde von radial außen nach radial innen, wobei die Ausbildung des Kupplungssitzes durch Fließdrücken von Material der Blechronde, im Anschluss an den Stützkragen 25 in Richtung der Zentrierbohrung 13 erfolgt. Dadurch ist gewährleistet, dass im Bereich der Zentrierbohrung, also im Bereich des Kupplungssitzes die größte Wandstärke der Gehäuserückwand 3 im Bereich 5 verfügbar ist und dadurch ein wesentliches Stabilitätskriterium des Gehäusekörpers erfüllt wird.

### Bezugszeichenliste

- 1: Dämpfergehäuse
- 3: Gehäuserückwand
- 5: Befestigungsflansch
- 7: Außenmantel
- 9: Lagerstuhl
- 11: Arbeitskammer
- 13: Zentrierbohrung
- 15: Anschraublöcher
- 17: Grobblechronde
- 18: Wandstärkenreduktion
- 19: Wulst
- 20: Keilrippenspur an dem Außenmantel
- 21: rückwärtige Riemenfelge
- 23: rückwärtige Keilrippenspur
- 25: Stützkragen
- 27: Kupplungssitz

## Patentansprüche

1. Verfahren zur Herstellung eines Drehschwingungsdämpfergehäuses, insbesondere des Gehäuses für einen Viskositätsdrehschwingungsdämpfer, mit einer im Dämpfergehäuse (1) ausgebildeten, mit einem viskosen Dämpfungsmittel füllbaren Arbeitskammer (11), in welcher ein seismischer Ring gelagert ist, sowie mit einem Befestigungsflansch (5) zur Befestigung an einem zu bedämpfenden, sich drehenden Maschinenteil, wobei das Dämpfergehäuse (1) aus einer bestehenden Grobblechronde (17) gefertigt wird und die Formgebung des Dämpfergehäuses (1) in einer Fließdrückmaschine im spanlosen Fließdrückumformverfahren erfolgt, **dadurch gekennzeichnet, dass** in aufeinanderfolgenden Fließdrückumformschritten alle aus der Ebene der Blechronde (17), welche die Gehäuserückwand (3) ausbildet, herausragenden Teile des Dämpfergehäuses (1) aus der Blechronde (17) unter Verringerung der Wandstärke derselben zu einem einstückigen Dämpfergehäuse fließgedrückt werden, wobei folgende Verfahrensschritte durchgeführt werde,
a) Fixieren der Grobblechronde (17) auf einer FJießdrückmaschine,
b) Drücken der radial inneren, die Arbeitskammer (11) teilweise bildenden Wand, des Lagerstuhls (9), aus der Grobblechronde (17), beginnend in einem definierten Abstand an deren radial äußeren Umfang mittels Drückrolle gegen einen Drückdomkörper und
c) Auswalzen des radial außen auf dem Umfang der Blechronde (17) entstandenen Wulstes (19) mittels einer Drückrolle gegen eine Zylinderhülse, unter Ausformung der radial äußeren sich in einem rechten Winkel von der Blechronde (17) weg erstreckenden Wand, des Außenmantels (7) der Arbeitskammer (11).

2. Verfahren nach Anspruch 1, **dadurch gekennzeichnet, dass** auf der nach außen gerichteten Oberfläche des Außenmantels (7) spanlos, unter Drücken des Außenmantels (7) gegen einen Drückdomkörper eine profilierte Laufspur (20), insbesondere eine Poly-V-Spur zur Aufnahme eines profilierten Zugmittels, insbesondere eines Keilrippenriemens, ausgebildet wird.

3. Verfahren nach Anspruch 1, **gekennzeichnet durch** folgende weitere Verfahrensschritte:
a) weiteres Fließdrücken der Gehäuserückwand (3) auf der der Arbeitskammer (11) gegenüberliegenden Seite der Grobblechronde (17) von radial außen nach radial innen gegen einen Drückdomkörper zur Ausbildung einer rückwärtigen Riemenscheibe (21).

4. Verfahren nach Anspruch 3, **dadurch gekennzeichnet, dass** die rückwärtige Riemenscheibe (21) mit einem Profil zur Aufnahme von Zugmitteln, insbesondere eines Keilrippenriemens mit einer Laufspur (23), unter Fließdrücken der Oberfläche der Riemenscheibe (21) gegen einen Drückdomkörper, profiliert wird.

5. Verfahren nach Anspruch 1, **dadurch gekennzeichnet, dass** durch weiteres Fließdrücken auf der dem Außenmantel (7) und dem Lagerstuhl (9) gegenüberliegenden Seite der Blechronde (17) ein Stützkragen (25) und ein Kupplungssitz (27) zur Aufnahme einer drehelastisch abgekoppelten Riemenscheibe spanlos, durch Fließdrücken gegen einen Drückdomkörper herausgeformt wird.

6. Verfahren nach Anspruch 5, **dadurch gekennzeichnet, dass** der Stützkragen (25) durch Fließdrücken der Blechronde (17) von radial außen nach radial innen gegen einen Drückdomkörper erfolgt und wobei in einem weiteren Verfahrensschritt der Kupplungssitz (27) gegen einen Drückdomkörper aufgeworfen wird, wobei eine Fließdrückrolle von radial außen, nach dem Stützkragen (25) beginnend nach radial innen in Richtung einer Zentrierbohrung (13) das Material fließdrückt.

## Claims

1. Method for producing a torsional vibration damper housing, in particular the housing for a viscosity torsional vibration damper, having a working chamber (11) formed in the damper housing (2) which can be filled with a viscous damping medium and in which is mounted a seismic ring, and having a securing flange (5) for securing it to a rotating machine part to be damped, the damper housing (1) being manufactured from an existing circular plate blank and the shaping of the damper housing (1) taking place in an impact extruding machine using a non-cutting impact extrusion forming method,
**characterised in that**
in successive impact extrusion forming steps all the parts of the damper housing (1) projecting out of the plane of the circular plate blank (17) forming the rear housing wall (3) are impact extruded from the circular plate blank (17) by reducing its wall thickness to form a one-piece damper housing, the following steps being carried out:
a) fixing of the circular plate blank (17) onto an impact extrusion machine,
b) pressing of the radially inner wall of the thrust bearing (9) which forms part of the operating chamber (11) from the round plate blank (17), starting a specific distance from its radially outer periphery, by means of an impact extrusion roller acting against an impact extrusion mandrel body, and
c) rolling out the radially outer bead (19) created on the periphery of the circular plate blank (17) by means of an impact extrusion roller acting against a cylinder sleeve, thereby forming the radially outer wall of the outer jacket (7) of the working chamber (11) which extends at right angles away from the circular blank (17).

2. Method in accordance with claim 1,
**characterised in that**
a profiled running track (20), in particular a poly-V-track for receiving a profiled traction means, in particular a V-ribbed belt, is formed on the outward facing surface of the outer jacket (7) without cutting by pressing the outer jacket (7) against an impact extrusion mandrel body.

3. Method in accordance with claim 1,
**characterised by**
the following further steps:
a) further impact extrusion of the rear housing wall (3) on the side of the circular plate blank (17) opposite the working chamber (11) from radially outward to radially inward against an impact extrusion mandrel body to form a reverse pulley (21).

4. Method in accordance with claim 3,
**characterised in that**
the reverse pulley (21) is profiled with a profile for receiving traction means, in particular a V-ribbed belt with a running track (23), by impact extruding the surface of the pulley (21) against an impact extrusion mandrel body.

5. Method in accordance with claim 1,
**characterised in that**
by further impact extruding on the side of the circular plate blank (17) opposite the outer jacket (7) and the thrust bearing (9), a supporting collar (25) and a coupling seat (27) for receiving a torsionally elastically decoupled pulley are formed without cutting by impact extrusion against an impact extrusion mandrel body.

6. Method in accordance with claim 5,
**characterised in that**
the supporting collar (25) is produced by impact extruding the circular plate blank (17) from radially outward to radially inward against an impact extrusion mandrel body and whereby in a further step the coupling seat (27) is pushed up against an impact extrusion mandrel body, an impact extrusion roller impact extruding the material from radially outward to radially inward after the supporting collar (25) beginning after radially inward towards a central bore (13).

## Revendications

1. Procédé de fabrication d'un carter d'amortisseur de vibrations de torsion, notamment d'un carter d'un amortisseur de vibrations de torsion par viscosité, comprenant une chambre de travail (11) formée dans le carter d'amortisseur (1) et pouvant être remplie d'un fluide d'amortissement visqueux, et dans laquelle est monté un anneau séismique, et comprenant également un flasque de fixation (5) pour la fixation à une pièce de machine en rotation, à amortir, le carter d'amortisseur (1) étant fabriqué à partir d'un flan circulaire de tôle épaisse (17) existant, et la mise en forme du carter d'amortisseur (1) étant effectuée dans une machine de fluotournage selon un procédé de formage par fluotournage, sans enlèvement de copeaux, **caractérisé en ce que** dans des étapes successives de formage par fluotournage, toutes les parties du carter d'amortisseur (1) faisant saillie du plan du flan circulaire de tôle (17), qui constitue la paroi arrière (3) du carter, sont formées par fluotournage par réduction de l'épaisseur de paroi de ce flan circulaire de tôle, en réalisant ainsi un carter d'amortisseur en une seule pièce, les étapes de procédé suivantes étant effectuées :
a) fixation ou ablocage du flan circulaire de tôle épaisse (17) dans une machine de fluotournage,
b) repoussage de la paroi radialement la plus à l'intérieur, qui forme partiellement la chambre de travail (11) et constitue l'appui de palier (9), à partir du flan circulaire de tôle épaisse (17), en débutant à une distance définie du bord radialement extérieur, au moyen d'un galet de repoussage, contre un corps de mandrin de repoussage, et
c) repoussage par laminage du bourrelet (19) résultant, situé radialement à l'extérieur au niveau de la périphérie du flan circulaire de tôle (17), au moyen d'un galet de repoussage, contre un manchon cylindrique, en réalisant le formage de la paroi qui constitue l'enveloppe extérieure (7) de la chambre de travail (11) et s'étend radialement le plus à l'extérieur en s'éloignant à angle droit du flan circulaire de tôle (17).

2. Procédé selon la revendication 1, **caractérisé en ce que** sur la surface de l'enveloppe extérieure (7), qui est dirigée vers l'extérieur, est formée sans enlèvement de copeaux, par repoussage de l'enveloppe extérieure (7) contre un corps de mandrin de repoussage, une voie de guidage profilée (20), notamment une voie de guidage selon un profil strié ou nervuré du type poly-V, pour recevoir un moyen de traction profilé, notamment une courroie trapézoïdale à nervures multiples.

3. Procédé selon la revendication 1, **caractérisé par** les étapes de procédé supplémentaires suivantes :
a) fluotournage supplémentaire de la paroi arrière (3) du carter, sur le côté du flan circulaire de tôle épaisse (17), qui est opposé à celui où se trouve la chambre de travail (11), radialement de l'extérieur vers radialement à l'intérieur contre un corps de mandrin de repoussage, en vue de former une poulie (21) arrière.

4. Procédé selon la revendication 3, **caractérisé en ce que** la poulie (21) arrière est munie d'un profil avec une voie de guidage (23), destiné à recevoir un moyen de traction, notamment une courroie trapézoïdale à nervures multiples, par fluotournage de la surface de la poulie (21) contre un corps de mandrin de repoussage.

5. Procédé selon la revendication 1, **caractérisé en ce que** sur le côté du flan circulaire de tôle (17), qui est opposé à celui où se trouvent l'enveloppe extérieure (7) et l'appui de palier (9), sont formés sans enlèvement de copeaux, par fluotournage contre un corps de mandrin de repoussage, une collerette d'appui (25) et un siège d'accouplement (27) pour recevoir une poulie découplée élastiquement en torsion.

6. Procédé selon la revendication 6, **caractérisé en ce que** la collerette d'appui (25) est formée par fluotournage du flan circulaire de tôle (17), radialement de l'extérieur vers radialement à l'intérieur, contre un corps de mandrin de repoussage, et dans une autre étape de procédé, le siège d'accouplement (27) est refoulé contre un corps de mandrin de repoussage, un galet de fluotournage repoussant la matière par fluage, radialement de l'extérieur, en débutant après la collerette d'appui (25), vers radialement à l'intérieur en direction d'une ouverture de centrage (13).
